# Europäisches Patentamt

# European Patent Office

# Office européen des brevets

(19)

(11) Veröffentlichungsnummer: **0 204 183**
**B1**

(12)

# EUROPÄISCHE PATENTSCHRIFT

(45) Veröffentlichungstag der Patentschrift:
**10.05.89**

(21) Anmeldenummer: **86106495.4**

(22) Anmeldetag: **13.05.86**

(51) Int. Cl.⁴: **G 01 F 25/00,** G 01 F 1/68,
F 02 D 41/18

(54) Abgleichverfahren für einen Hitzdraht-Luftmassenmesser und Hitzdraht-Luftmassenmesser.

(30) Priorität: **07.06.85 DE 3520392**

(43) Veröffentlichungstag der Anmeldung:
**10.12.86 Patentblatt 86/50**

(45) Bekanntmachung des Hinweises auf die Patenterteilung:
**10.05.89 Patentblatt 89/19**

(84) Benannte Vertragsstaaten:
**DE FR GB IT SE**

(56) Entgegenhaltungen:
**GB-A-2 107 883**
**US-A-4 264 961**

(73) Patentinhaber: **ROBERT BOSCH GMBH, Postfach
50, D-7000 Stuttgart 1 (DE)**

(72) Erfinder: **Peter, Cornelius, Dipl.- Ing., Burg-
Windeck- Strasse 35, D-7583 Ottersweier (DE)**
Erfinder: **Plapp, Günther, Dipl.- Ing.,
Gymnasiumstrasse 26, D-7024 Filderstadt 1 (DE)**

## Beschreibung

### Stand der Technik

Die Erfindung geht aus von einem Abgleichverfahren für einen Hitzdraht-Luftmassenmesser nach der Gattung des Anspruchs 1 sowie einem Hitzdraht-Luftmassenmesser nach der Gattung des Anspruchs 4. Ein derartiges Verfahren und ein derartiger Hutzdraht-Luftmassenmesser sind aus US-A-4 264 961 bekannt. Die Verwendung von sogenannten Hitzdraht-Luftmassenmessern zur Gewinnung eines Lastsignals bei einer Brennkraftmaschine - in diesem Fall Erfassung des Luftdurchsatzes durch das Ansaugrohr - ist bei elektrischen oder elektronischen Kraftstoffdosiersystemen allgemein bekannt (DE-A-2 840 793). Es ist in diesem Zusammenhang auch bekannt, den im Ansaugrohr angeordneten Hitzdraht in einer Brückenschaltung mit mindestens zwei weiteren Widerständen anzuordnen und ein ggf. stabilisiertes und verstärktes Ausgangsmeßsignal $U_H$ des Hitzdraht-Luftmassenmessers dadurch für ein auf digitaler Basis arbeitendes Kraftstoffdosiersystem weiter aufzubereiten, daß das Ausgangsmeßsignal $U_H$ einem nachgeschalteten Analogdigitalwandler und anschließend von diesem dem eigentlichen Steuergerät für die Erzeugung von Kraftstoffeinspritzimpulsen zugeführt wird.

Dabei hat sich als nachteilig erwiesen daß bisher bekannte Eingangsschaltungen für den Hitzdraht-Luftmassenmesser häufig aus einzeln für sich abgeglichenen Komponenten bestanden mit der Folge, daß die jeweiligen Toleranzen sich addierten und eine noch akzeptable Gesamttoleranz daher hochgenaue und entsprechend teure Komponenten erforderlich machte.

Zwar ist es andererseits möglich, auch mit Komponenten zu arbeiten, die innerhalb eines normalen Toleranzbereiches liegen; in diesem Fall ist aber ein mindestens dreifach iterativer Abgleich an mehreren Stellen erforderlich, so daß das Abgleichverfahren wiederum so kostenintensiv ist, und im übrigen entsprechend automatisierungsfeindlich, daß zur Vermeidung dieser Probleme der vorliegenden Erfindung die Aufgabe zugrundeliegt, ein Abgleichverfahren für einen Hitzdraht-Luftmassenmesser sowie einen für die Realisierung dieses Abgleichverfahrens geeigneten Hitzdraht-Luftmassenmesser zu schaffen, bei dem auch unter Einbeziehung des Umstandes, daß ein nichtlinearer Zusammenhang zwischen Luftmassendurchsatz und Ausgangsmeßsignal des Hitzdraht-Luftmassenmessers besteht, ein besonders einfacher Abgleich möglich ist, bei dem keine Addition von Einzeltoleranzen auftritt, der die Verwendung von nur wenigen preiswerten Bauteilen ermöglicht und dennoch bei erzielter besonders hoher Präzision nur einige einfache, darüber hinaus noch nichtiterative Abgleiche erfordert

Aus der GB-A-2 107 883 ist ein einen Hitzdraht verwendendes Flüssigkeitspegelmeßgerät bekannt, bei dem die Ausgangsspannung des Hitzdrahtes über einen Analogdigitalwandler einem Mikroprozessor zugeführt wird. Das Meßgerät enthält zudem eine an den Eingang des Analogdigitalwandlers angeschlossene Referenzspannungs-Teilerschaltung.

### Vorteile der Erfindung

Das erfindungsgemäße Abgleichverfahren für einen Hitzdraht-Luftmassenmesser sowie der erfindungsgemäße Hitzdraht-Luftmassenmesser lösen diese Aufgabe jeweils mit den Merkmalen des Anspruchs 1 bzw des Anspruchs 4 und haben den Vorteil, daß der Abgleich im fertig zusammengebauten Steuergerät als sogenannter Abgleich "über alles", also unter Berücksichtigung der betriebsbereiten Einbauerverhältnisse, durchgeführt werden kann. Dabei ist auch ein vollautomatischer Abgleich möglich, indem mittels Laserstrahlen auf der Hybridschaltung lediglich Widerstandswert in dem Wiederstandsnetzwerk des das Ausgangsmeßsignal $U_H$ verarbeitenden Eingangsverstärkers zu trimmen sind. Von besonderem Vorteil ist ferner, daß das erfindungsgemäße Abgleichverfahren ein nichtiteratives Verfahren ist und jede Addition von Einzeltoleranzen vermieden wird. Der Abgleich kann im fertigzusammengebauten Steuergerät erfolgen, wobei den Laserstrahl-Führungsmitteln so lange ein Differenzwert, also im Grunde die Abgleich-Regelabweichung zugeführt wird, bis bei jedem der zugeführten Analogwerte der "richtige" Digitalwert an einer entsprechenden Schnittstelle des Rechners erscheint. Aktiviert man ein entsprechendes Testprogramm im Rechner, bei dem dann bispielsweise dem Eingang des Eingangsverstärkers etwa zwei analoge Signale, beispielsweise eine relativ niedrige $U_H$-Spannung und eine relativ hohe $U_H$-Spannung zugeführt werden, dann kann der Rechner selbst den Abgleich vollautomatisch durchführen, wobei er die Laserstrahlführungsmittel so lange ansteuert, wie sich eine Differenz zwischen den zu eführten analogen Spannungswerten und den entsprechenden, am Ausgang zu erwartenden digitalen Werten ergibt.

Durch die in den abhängigen Ansprüchen aufgeführten Maßnahmen sind vorteilhafte Weiterbildungen und Verbesserungen der Erfindung möglich. Besonders vorteilhaft ist der einfache Aufbau des Eingangsverstärkers für das Ausgangsmeßsignal des Hitzdrahtmessers in Form eines Operationsverstärkers mit einer äußeren Beschaltung von lediglich vier Widerständen, von denen dann lediglich zwei durch den Abgleich entsprechend getrimmt werden

**EP 0 204 183 B1**

## Zeichnung

Ein Ausführungsbeispiel der Erfindung ist in der Zeichnung dargestellt und wird in der nachfolgenden Beschreibung näher erläutert. Es zeigen Fig 1 in detaillierter Darstellung eine typische Schaltung zur Aufbereitung des analogen Ausgangsmeßsignals $U_H$ des Hitzdraht-Luftmassenmessers für einen nachgeschalteten Analogdigitalwandler und die Figuren 2 und 3 die Eichkurve des Hitzdraht-Luftmassenmessers sowie die Ausgangswerte des Analogdigitalwandlers mit den entsprechenden zugeordneten Luftmassenwerten.

## Beschreibung der Ausführungsbeispiele

Der Grundgedanke vorliegender Erfindung besteht darin, einen Abgleich "über alles" im fertig zusammengebauten Steuergerät zu ermöglichen, indem der de Eingangs-Differenzverstärker nachgeschaltete Analogdigitalwandler und der Rechner, auf welchen dieser arbeitet, zugleich als Meßmittel verwendet werden. Durch Aktivierung eines entsprechenden Testprogramms im Rechner werden am Eingang des Differenzverstärkers entsprechende Ausgangsmeßsignale $U_H$ eingelesen, über eine serielle Rechnerschnittstelle wieder ausgegeben. und vorzugsweise sofort zur Realisierung eines vollautomatischen Abgleichs mit den zu erwartenden Digitalwerten verglichen und der Abgleich, ebenfalls vorzugsweise über Laser, auf der Hybridschaltung, vorgenommen.

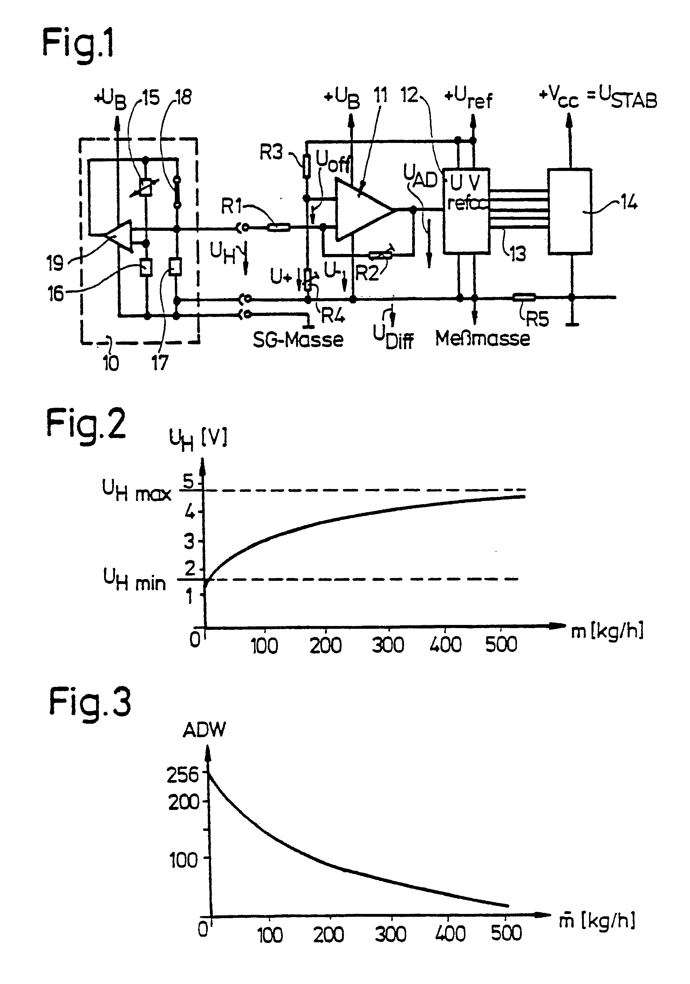

Die das analoge Ausgansgmeßsignal $U_H$ des Hitzdraht-Luftmassenmessers zur Abtastung durch den Rechner des Steuergeräts aufbereitende Eingangsschaltung umfaßt entsprechend Fig. 1 einen dem Hitzdraht-Luftmassenmesser 10 nachgeschalteten Differenzverstärker 11; dem Differenzverstärker 11 ist ein Analogdigitalwandler 12 nachgeschaltet, der die ihm vom Differenzverstärker 11 zugeführten analogen Ausgangsspannungen $U_{AD}$ in digitale Werte umwandelt und über entsprechende Daten- und Kontrolleitungsverbindungen 13 einem nachgeschalteten Rechner 14 zuführt, der, worauf in diesem Zusammenhang nicht weiter eingegangen zu werden braucht, in der üblichen Weise noch weitere Betriebsparameter einer Brennkraftmaschine zugeführt erhält, beispielsweise Angaben über Drehzahl, Temperatur, Lufttemperatur, Leerlauf, Vollast u. dgl. und daraus letzten Endes die Dauer von Kraftstoffeinspritzimpulsen bestimmt, die der Brennkraftmaschine zuzuführen sind. Dies gilt jedenfalls dann, wenn es sich bei der die Ausgangsmeßsignale des Hitzdraht-Luftmassenmessers verarbeitenden Schaltung um eine Kraftstoffeinspritzanlage handelt - es versteht sich, daß die erfindungsgemäße Auswerteschaltung mit Hitzdraht-Luftmassenmesser und das der Erfindung zugrundeliegende Abgleichverfahren bei beliebigen Kraftstoffdosiersystemen angewendet werden können.

Der in Fig. 1 mit 10 bezeichnete eigentliche Hitzdraht-Luftmassenmesser besteht für sich selbst aus dem im Ansaugrohr einer Brennkraftmaschine angeordneten Hitzdraht 15 in einer Brückenschaltung (Wheatstone-Brücke) mit drei weiteren Widerständen 16, 17 und 18 - letzterer kann auch eine Überbrückungsklemme sein. Etwa zur Stabilisierung ist bei dem in Fig. 1 gezeigten Aufbau des Hitzdraht-Luftmassenmessers noch ein Operationsverstärker 19 vorgesehen, dessen beide Eingänge mit der Brückendiagonalen verbunden sind und dessen Ausgang die den eigentlichen Hitzdraht enthaltende Brücke speist, wobei aufgrund der Überbrückungsklemme 18 die Ausgangsspannung gleichzeitig auch an dem anderen Eingang des Operationsverstärkers 19 anliegt. Die Speisespannung für den Operationsverstärker 19 ist mit $+U_B$ bezeichnet; am Ausgang des Hitzdraht-Luftmassenmessers fällt das Ausgangssmeßsignal $U_H$ ab und wird über einen ersten Widerstand R1 auf den invertierenden Eingang des nachgeschalteten Differenzverstärkers 11 geführt, der über einen Widerstand R2 (veränderbar durch Abgleich) vom Ausgang rückgekoppelt ist. Am anderen, nichtinvertierenden Eingang des Differenzverstärkers 11 liegt die Reihenschaltung zweier Widerstände R3 (durch Abgleich veränderbar) sowie R4 (einstellbar) an; diese Spannungsteilerschaltung wird, ebenso wie der Analogdigitalwandler 12 gespeist von einer genauen Referenzspannung $+U_{ref}$. Die Speisespannung für den Differenzverstärker 11 ist wiederum die Spannung. $+U_B$; dabei sind, was für die nachfolgenden Rechnungen sinnvoll ist, noch zwei weitere Spannungen definiert, nämlich die am Widerstand R4 abfallende Spannung mit $U+$ und die Spannung vom invertierenden Anschluß gegen Masse mit $U-$; zwischen den beiden Eingangsanschlüssen des Differenzverstärkers 11 ergibt sich dann noch, wie ja bekannt, die Offset-Spannung $U_{off}$.

Die folgenden Ausführungen betreffen sich aus diesen Schaltungsgegebenheiten ergebende Berechnungsmöglichkeiten hauptsächlich. für den Eingangsverstärker, wobei nachfolgend dann auch mit numerischen Werten unter Zugrundelegung bestimmter Schaltungskomponenten und Widerstandsverhältnisse gearbeitet wird. Dies dient zum besseren Verständnis der Erfindung, schränkt diese aber, wie es sich versteht, nicht ein. Es sei schließlich noch erwähnt, daß der Differenzverstärker 11 die eine Hälfte eines unter der Bezeichnung 29 Ø 4 von der Firma National Semiconductors erhältlichen integrierten Bausteins ist; der Analogdigitalwandler 12 ist unter der Bezeichnung ADØ8Ø9 von der Firma National Semiconductors erhältlich, und der Rechner des Steuergeräts trägt die Bezeichnung 8051 und wird von der Firma Intel vertrieben.

Durch die Ankopplung der des Hitzdraht-Luftmassenmessers an den Minusanschluß des Differenzverstärkers 11 und des Analogdigitalwandlers 12 erübrigt sich ein "echter" Differenzverstärker. Die Steuergerätemasse (SG-Masse) ist mit der Meßmasse über den Hitzdraht-Luftmassenmesser 10 verbunden. Zur Sicherheit (und

3

Entstörung) ist zwischen den beiden Massen im Steuergerät vorzugsweise noch ein Widerstand R5 von beispielsweise 1 Ohm geschaltet.

Da das Ausgangsmeßsignal $U_H$ einen Absolutwert darstellt, muß auch der Analogdigitalwandler mit einer Referenzspannung Uref versorgt werden. Die maximal möglichen Spannungsversätze ($U_{DIFF} < 100$ mV, $|Uref - U_{STAB}| < 0,2$ V) werden auf den Daten- bzw. Kontrolleitungen 13 noch ohne weiteres vertragen. Insbesondere sind die Ströme eventueller Entstörkondensatoren von der Meßmasse fernzuhalten, was auch für die Lambdaregelung wichtig ist.

Berechnet man die Spannungs- und Widerstandsverhältnisse für den Eingangsverstärker dann gelten die folgenden Gleichungen:

1. $U- = (U_{AD} - U_H) \frac{R1}{R1+R2} + U_H \wedge U- = \frac{R1}{R1+R2} \cdot U_{AD} + \frac{R2}{R1+R2} \cdot U_H$

2. $U+ = \frac{R4}{R3+R4} \cdot Uref$

3. $U- = U+ + Uoff$

4. $ADW = 256 \cdot \frac{U_{AD}}{Uref};$

ADW Ausgangszahl des Analogdigitalwandlers 12.

Aus den Formeln zu 1., 2., 3., 4. folgt

5. $ADW = (\frac{(R4 \cdot (R1 + R2)}{(R3 + R4) \cdot R1} \cdot \frac{U_H}{Uref} \cdot \frac{R2}{R1} - \frac{R1 + R2}{R1} \cdot \frac{Uoff}{Uref}) \cdot 256$

Für die Bemessung kann man daher wie folgt vorgehen, wobei der zu verarbeitende Hub $U_{H\,max} - U_{H\,min}$ des Ausgangsmeßsignals $U_H$ das Verhältnis der Widerstände R1 und R2 bestimmt:

6. $\frac{Uref}{U_{H\,max} - U_{H\,min}} = \frac{R2}{R1}$ (Verstärkung)

Der Spannungsteiler R3, R4 ergibt sich dann aus der folgenden Gleichung:

7. $\frac{R4}{R3+R4} = \frac{R1}{R1+R2} + \frac{R2}{R1+R2} \cdot \frac{U_{H\,min}}{Uref} = \frac{U+}{Uref}$

Es liegen nunmehr unter Einbeziehung des Eichkurvenverlaufs eines speziellen Hitzdraht-Luftmassenmessers, wie dies in numerischen Werten in Fig. 2 dargestellt ist, und des Ausgangs-Werteverlaufs des Analogdigitalwandlers bei Anwendung der Formeln 6. und 7. die für die Durchführung des Abgleichs auf Offset und Verstärkung erforderlichen Berechnungsgrundlagen vor, wobei der Abgleich, weil die gesamte Kette aus Eingangsverstärker, Analogdigitalwandler, Referenzspannung u. dgl. mit Fehlern behaftet ist, grundsätzlich so durchgeführt wird, daß an den Eingang des Differenzverstärkers 11 von einer hochpräzisen Spannungsquelle mindestens zwei analoge Spannungswerte etwa für relativ niedrige und für relativ hohe Ausgangsmeßsignaale, angelegt werden und an einer seriellen Schnittstelle des Rechners 14 die entsprechenden Digitalwerte erfaßt werden. Entsprechen diese nicht den vorher bestimmten, erwarteten Werten, wird dann durch Veränderung lediglich der Widerstände R3 und R2 ohne iterative Wiederholung der Abgleich "über alles" durchgeführt, der analogtechnisch lediglich durch Widerstandsänderung im Widerstandsnetzwerk des Eingangsverstärkers 11 realisiert wird. Ein elegantes Abgleichverfahren für den Eingangsverstärker 11 besteht daher in der Verwendung des Analogdigitalwandlers 12 mit nachgeschaltetem Rechner als Meßmittel, wobei im Rechner ein Testprogramm aktiviert wird, welches die $U_H$-Werte einliest und über eine serielle Schnittstelle wieder ausgibt bzw. bei automatischem Ablauf die Abweichung der ausgegebenen Digitalwerte von den zu erwartenden zur Ansteuerung der Abgleichmittel benutzt. Abgleichmittel sind dann wieder bevorzugt Laser-Einrichtungen die auf der Hybridschaltung, wie im folgenden noch genauer erläutert, die entsprechenden Widerstandswerte verändern.

Zur Durchführung des sogenannten Offsetabgleichs wird davon ausgegangen, daß das die Verstärkung bestimmende Widerstandsverhältnis aus R2/R1 auf den Ausgang dann den geringsten Durchgriff hat, wenn die Ein- und Ausgangspins oder Anschlüsse des Operationsverstärkers, also des Eingangsdifferenzverstärkers 11 auf dem gleichen Spannungspegel liegen. Daher wird das Ausgangsmeßsignal $U_H$ gewählt zu

8. $U_H = \frac{R4}{R3+R4} \cdot Uref$; mit R3, R4 = Idealwerte aus Formel 7.

Jetzt muß man R3 so trimmen,. daß der ADW-Wert aus der nachfolgenden Formel 9. erfüllt ist:

9. $ADW = \frac{R4}{R3+R4} \cdot Uref$; mit R3, R4 = Idealwerte aus Formel 7.

Für den Verstärkungsabgleich wird davon ausgegangen, daß für Eingangsspannungen $U_H$ nahe $U_{H\,min}$ und nahe $U_{H\,max}$ der Durchgriff des Widerstandsverhältnisses R2/R1 am größten ist. In diesen Punkten läßt sich daher jetzt die Verstärkung insoweit problemlos messen und der Widerstand R2 entsprechend zum Abgleich trimmen.

4

Die folgenden Ausführungen betreffen noch eine Toleranzbetrachtung der verschiedenen Einflußgrößen, und zwar, wie eingangs schon erwähnt, unter Zugrundelegung numerischer Werte, um eine effektive Abschätzung zu ermöglichen. Diese Ausführungen runden daher die Erfindung ab, schränken diese jedoch nicht auf die angegebenen Ausführungsformen ein. Betrachtet werden lediglich die wesentlichen Einflußgrößen wie Uref, Uoff und die Genauigkeit des Analogdigitalwandlers 12.

Zur Genauigkeitsbetrachtung des Analogdigitalwandlers 12 läßt sich die Eichkurve des Hitzdraht-Luftmassenmessers 4.7 (HJ 63) mit der Funktion $\dot{m}$ [kg/h] = 13.5 · $(U_H[V] - 1,15)^3$ annähern.

Abgeleitet nach $U_H$: $\frac{d\dot{m}}{dU_H} = 40,5 \cdot (U_H - 1,15)^2$

Bei Uref = 5,0 V entspricht 1 LSB = $\frac{5,0 V}{256}$ = 19,5 mV.

Für eine Verstärkung des Differenzverstärkers 11 von $\frac{R2}{R1} = 1,6$ (bzw. 1,9) folgt dann:

$\frac{\Delta U_H}{LSB} = \frac{19,5 mV}{1,6}$ = 12,2 mV/LSB (bzw. 10,2)

Darin bedeutet LSB: least significant bit, d.h. die Binärstelle mit der niedrigsten Wertigkeit.

Es gilt also:

$\frac{\Delta\lambda}{LSB} = \frac{\frac{d\dot{m}}{dU_H}}{\dot{m}} \cdot 1,22$ (bzw. 1,02)

Die folgende Tabelle gibt mögliche Variationsbereiche des Luftmassendurchflusses in einem Ansaugrohr einer Brennkraftmaschine in numerischen Werten und unter Zugrundelegung der soeben durchgeführten Berechnung an.

| $\dot{m}$[kg/h] | $U_H$[V] | $\frac{d\dot{m}}{dU_H}$ | $\frac{\Delta\lambda}{LSB}$ [%] | $\frac{\Delta\lambda}{LSB}$ [%] |
|---|---|---|---|---|
| Hitzdraht-Luftmassenmesser | | | | |
| (4.7 mit HJ 63) | | | $\frac{R2}{R1} = 1,6$ | $\frac{R2}{R1} = 1,9$ |
| 10 | 2,0451 | 33 | 4,0 | 3,4 |
| 30 | 2,4674 | 70 | 2,8 | 2,4 |
| 90 | 3,0193 | 141 | 1,9 | 1,6 |
| 400 | 4,2691 | 394 | 1,2 | 1,0 |

Bei einem angenommenen Variationsbereich im Durchfluß von 1 : 100 bzw. 5 kg/h : 500 kg/h kann die Verstärkung $\frac{R2}{R1}$ = 1,9 gewählt werden d.h. die letzte Spalte der Tabelle gilt. Der Analogdigitalwandler 12 (AD 0809) ist von 0° bis + 70°C auf einen Maximalfehler von ± 1 LSB spezifiziert.

Die Offsetspannung des Differenzverstärkers 11 selbst hat keinen signifikanten Einfluß auf die Genauigkeit, da sie per Abgleich kompensiert wird.

Der Temperaturgang typischer Operationsverstärker (z. B. LM 2904) für die Offsetspannung beträgt etwa 7 μV/°C. Über ΔT = 100°C entsteht dann ein ΔUoff = 0,7 mV. Aus Formel 5. mit $\frac{R2}{R1}$ = 1,9 erhält man:

ADW = 436 - 97 · $U_H$ - 148 Uoff

ΔADW = 148 · 7 · 10$^{-4}$ = 0,103 LSB ($\doteq$ 0,35 % Δλ)

Die Drift der Offsetspannung spielt praktisch keine Rolle.

Bei der Toleranzbetrachtung bezüglich der Genauigkeit der Referenzspannung Uref folgt aus Gleichung 5. mit Uoff = 0 und $\frac{R2}{R1}$ = 1,9

ADW = 436 - 485 $\frac{U_H}{Uref}$

$\frac{dADW}{dUref}$ = 485 $\frac{U_H}{Uref^2}$

Die notwendige Änderung der Referenzspannung Uref, um 1 LSB Fehler zu erzeugen, hängt also vom Arbeitspunkt ab (Uref = 5 V):

LL ($\dot{m}$ = 10 kg/h) : ΔUref = 25 mV/LSB. Mit LL als Abkürzung für Leerlauf.

VL ($\dot{m}$ = 400 kg/h): ΔUref = 12 mV/LSB. Mit VL als Abkürzung für Vollast.

Mit $\Delta U_{ref}$ = 15 mV beträgt der λ-Fehler über den gesamten Hub etwa Δλ ≤ 1,5 %. Wenn diese Spannungsdrift bei einem Temperaturbereich von 0° + 50°C zu realisieren ist, so darf die Spannung $U_{ref}$ eine Temperaturdrift von 60ppm/°C haben.

**Patentansprüche**

1. Abgleichverfahren für einen Hitzdraht-Luftmassenmesser bei elektronischen Kraftstoffdosiersystemen, insbesondere elektronischen Kraftstoffeinspritzanlagen oder gesteuerten Vergasern, mit einem im Ansaugrohr einer Brennkraftmaschine angeordneten Hitzdraht und einer dessen Ausgangssignal auswertenden und in eine digitale Größe umwandelnden Auswerteschaltung, dadurch gekennzeichnet, daß an den Eingang eines das Ausgangsmeßsignal ($U_H$) des Hitzdraht-Luftmassenmessers verstärkenden Verstärkers (11) nacheinander mindestens zwei bestimmte analoge Eichwerte, deren entsprechende digitale Werte am Ausgang der Auswerteschaltung bekannt sind, angelegt werden und daß unmittelbar unter Verwendung eines dem Verstärker (11) nachgeschalteten Analogdigitalwandlers (12) einschließlich eines Rechners (14) im betriebsbereiten Einbauzustand des Kraftstoffdosiersystems bei Aktivierung eines speziellen Testprogramms ein Abgleich lediglich durch Änderung von Widerstandswerten eines Wiederstandnetzwerkes des Eingangsverstärkers (11) so lange vorgenommen wird, bis die vom Rechner (14) beispielsweise über eine Schnittstelle ausgegebenen Digitalwerte den bekannten vorgegebenen Digitalwerten entsprechen.

2. Abgleichverfahren nach Anspruch 1, dadurch gekennzeichnet, daß der Abgleich automatisch durchgeführt wird, indem im aktivierten Testprogramm des Rechners ein Vergleich der ermittelten mit den vorgegebenen Digitalwerten durchgeführt wird und Abgleichmittel zur Widerstandsänderung so lange angesteuert werden, bis Identität zwischen den verglichenen Digitaalwerten erreicht ist.

3. Abgleichverfahren nach einem der Ansprüche 1 oder 2, dadurch gekennzeichnet, daß vom Rechner die Widerstandsänderung durch Ansteuerung von Laserablenkmitteln vorgenommen wird.

4. Hitzdraht-Luftmassenmesser mit zugeordneter Aufbereitungsschaltung, insbesondere zur Durchführung des Abgleichverfahrens nach einem der Ansprüche 1 - 3, mit einem das Ausgangsmeßsignal ($U_H$) des Hitzdraht-Luftmassenmessers (10) auswertenden Eingangsdifferenzverstärker (11) dadurch gekennzeichnet, daß an dem einen Eingang des Eingangsdifferenzverstärkers (11) einer Referenzspannungs-Teilerschaltung (R3, R4) vorgesehen ist und an den anderen Eingang, auf den zudem über einen weiteren Widerstand (R2) der Ausgang des Eingangsdifferenzverstärkers (11) rückgekoppelt ist, ein Eingangswiderstand (R1) gelegt ist daß mit dem Ausgang des Eingangsdifferenzverstärkers (11) ein Analogdigitalwandler (12) verbunden ist und daß dieser über Daten- und Kontrolleitungen (13) mit einem Rechner (14) des Steuergeräts für die Kraftstoffzumessung in Verbindung steht, wobei vorgegebenen Ausgangsmeßsignalen ($U_H$) entsprechende, vorbekannte digitale Werte an einer Schnittstelle des Rechners (14) erfaßbar sind und wobei Abgleichmittel vorgesehen sind zur Veränderung eines Widerstandes (R3) in der Referenzspannungs-Teilerschalltung und des Rückkopplungswiderstandes (R2) im Sinne einer Identitätsherbeiführung zwischen dem von der Kette aus Eingangsdifferenzverstärker (11), Analogdigitalwandler (12) und Rechner (14) ermittelten digitalen Wert und einem vorbekannten, dem jeweils zugeführten analogen Eingangswert entsprechenden digitalen Wert.

5. Hitzdraht-Luftmassenmesser nach Anspruch 4, dadurch gekennzeichnet, daß die Abgleichmittel eine Laserstrahl-Einrichtung umfassen, die zur Veränderung der Widerstandsschichtdicke des Widerstands (R3) in der Referenzspannungs-Teilerschaltung und des Rückkopplungswiderstandes (R2) vom digitalen Differenzwert zwischen dem vorbekannten und dem ermittelten Digitalwert gesteuert, auf die Hitzdraht-Luftmassenmesser-Hybridschaltung einwirken.

**Claims**

1. Method for calibrating a hot wire air mass flowmeter in electronic fuel metering systems, particularly electronic fuel injection systems or controlled carburettors, comprising a hot wire arranged in the intake pipe of an internal combustion engine and an evaluating circuit which evaluates the output signal of the latter and converts it into a digital quantity, characterized in that to the input of an amplifier (11) amplifying the output measurement signal ($U_H$) of the hot wire air mass flowmeter successively at least two particular analog calibration values are applied, the corresponding digital values of which at the output of the evaluating circuit are known and that a calibration is performed directly with the use of an analog/digital converter (12), following the amplifier (11), including a computer (14), in the operational installed condition of the fuel metering system with the activation of a special test program only by changing resistance values of a resistance network of the input amplifier (11) until the digital values output by the computer (14), for example via an interface, correspond to the known predetermined digital values.

2. Calibration method according to Claim 1, characterized in that the calibration is performed automatically in that a comparison of the determined digital values with the predetermined digital values is performed in the activated test program of the computer and calibration means for resistance changing are driven until identity is achieved between the compared digital values.

3. Calibration method according to one of Claims 1 or 2, characterized in that the resistance changing is performed by the computer by driving laser deflection means.

4. Hot wire air mass flowmeter with associated processing circuit, particularly for carrying out the calibration method according to one of Claims 1 - 3, with a differential input amplifier (11) which evaluates the output measurement signal ($U_H$) of the hot wire air mass flowmeter (10), characterized in that at one input of the differential input amplifier (11) a reference voltage divider circuit (R3, R4) is provided and to the other input, to

EP 0 204 183 B1

which in addition the output of the differential input amplifier (11) is fed back via a further resistor (R2), an input resistor (R1) is connected, that the output of the differential input amplifier (11) is connected to an analog/digital converter (12) and that the latter is connected via data and control lines (13) to a computer (14) of the control device for the fuel metering, in which arrangement previously known digital values corresponding to predetermined output measurement signals ($U_H$) can be picked up at an interface of the computer (14) and in which arrangement calibration means are provided for changing a resistor (R3) in the reference voltage divider circuit and the feedback resistor (R2) in the direction of producing an identity between the digital value determined by the chain of differential input amplifier (11), analog/digital converter (12) and computer (14) and a previously known digital value corresponding to the analog input value supplied in each case.

5. Hot wire air mass flowmeter according to Claim 4, characterized in that the calibration means comprise a laser beam device which, for changing the resistance layer thickness of the resistor (R3) in the reference voltage divider circuit and of the feedback resistor (R2), controlled by the digital difference value between the previously known and the determined digital value, act on the hot wire air mass flowmeter hybrid circuit.

**Revendications**

1. Procédé d'étalonnage d'un débitmètre massique d'air à fil chaud pour des systèmes de dosage de carburant, tout particulièrement des dispositifs électroniques d'injection de carburant ou des carburateurs pilotés, avec un fil chaud implanté dans la tubulure d'aspiration d'un moteur à combustion interne et un circuit d'évaluation évaluant son signal de sortie et le convertissant en une variable digitale, caractérisé en ce que, à l'entrée d'un amplificateur (11) amplifiant le signal de mesure de sortie ($U_H$) du débitmètre massique d'air à fil chaud, au moins deux valeurs d'étalonnage analogiques dont les valeurs numériques correspondantes à la sortie du circuit d'évaluation sont connues, sont appliquées successivement et que par utilisation d'un convertisseur analogique/numérique (12) placé dans le circuit à la suite de l'amplificateur (11), y compris un processeur (14), un étalonnage par simple modification de valeurs de résistance d'un réseau de résistances de l'amplificateur d'entrée (11) est effectué dans l'état de montage en ordre de marche du système de dosage de carburant, par l'activation d'un programme de test spécial, jusqu'à ce que les valeurs numériques délivrées par le processeur (14) par exemple à travers un interface, correspondent aux valeurs numériques connues et prédéterminées.

2. Procédé d'étalonnage suivant la revendication 1, caractérisé en ce que l'étalonnage est exécuté automatiquement par réalisation dans le programme de test activé du processeur une comparaison entre les valeurs numériques constatées et les valeurs numériques prédéterminées et que des organes d'étalonnage sont commandés pour modification de résistance, jusqu'à ce qu'il soit obtenu des valeurs numériques comparées.

3. Procédé d'étalonnage suivant l'une des revendications 1 ou 2, caractérisé en ce que la modification de résistance est effectuée par le processus, par la commande d'organes de déflexion d'un rayon laser.

4. Débitmètre massique d'air avec circuit de traitement associé, en particulier pour exécution du procédé d'étalonnage suivant l'une les revendications 1 - 3, avec un amplificateur différentiel d'entrée (11) évaluant le signal de mesure de sortie ($U_H$) du débitmètre d'air massique (10), caractérisé en ce qu'un circuit diviseur de tension de référence (R3, R4) est prévu à l'une des entrée de l'amplificateur différentiel d'entrée (11) et qu'une résistance d'entré (R1) est placée sur l'autre entrée, sur laquelle est en outre appliquée en réaction la sortie de l'amplificateur différentiel d'entrée (11), à travers une autre résistance (R2), en ce qu'un convertisseur analogique/numérique (12) est relié à la sortie de l'amplificateur différentiel d'entrée (11), et que le convertisseur (12) communique à travers des bus de données et de contrôle (13) avec un processeur (14) du bloc de commande du dosage de carburant, des valeurs numériques connues l'avance et correspondant à des signaux de mesure de sortie ($U_H$) prédéterminés pouvant être saisis sur un interface du processeur (14) et des moyens d'étalonnage étant prévus pour la modification d'une résistance (R3) dans le circuit diviseur de tension de référence et de la résistance de réaction (R2) dans le sens d'établir une égalité entre la valeur numérique déterminée par la chaîne constituée de l'amplificateur différentiel d'entrée (11), du convertisseur analogique/numérique (12) et du processeur (14), et une valeur numérique connue d'avance et correspondant à la valeur d'entrée analogique du signal d'entrée.

5. Débitmètre massique d'air à fil chaud suivant la revendication 4, caractérisé en ce que les moyens d'étalonnage comprennent un dispositif à rayon laser qui, piloté par la valeur différentielle numérique entre la valeur numérique prédéterminée et la valeur numérique mesurée, pour la modification de l'épaisseur de couche de la résistance (R3) du circuit diviseur de tension de référence et de la résistance de réaction (R2), agit sur le circuit hybride du débitmètre massique d'air à fil chaud.

## Fig.1

## Fig.2

## Fig.3